# EUROPÄISCHE PATENTSCHRIFT

(11) **EP 1 293 240 B1**
(45) Veröffentlichungstag und Bekanntmachung des Hinweises auf die Patenterteilung: **27.09.2006**
(21) Anmeldenummer: 02016063.6
(22) Anmeldetag: 19.07.2002
(51) Int. Cl.: B01D 46/04, B41F 23/06

(54) **Filter für mit Pulver- oder Puderteilchen beladene Luft**
Filter for air loaded with powdery particles
Filtre à air chargé de particules de poudre

(30) Priorität: 17.09.2001 DE 10145763
(43) Veröffentlichungstag der Anmeldung: 19.03.2003
(73) Patentinhaber: Platsch GmbH & Co. KG, 70565 Stuttgart (DE)
(72) Erfinder: Platsch, Hans G., 70565 Stuttgart (DE)
(74) Vertreter: Ostertag, Reinhard

(56) Entgegenhaltungen:
- DE-C- 969 862
- US-A- 4 199 334
- US-A- 4 792 344

## Beschreibung

Die Erfindung betrifft ein Filter für mit Pulver- oder Puderteilchen beladene Luft mit
a) einem äußeren Filtergehäuse, das einen Ansaugraum für beladene Luft und einen Auslaßraum für gereinigte Luft aufweist;
b) einem aus Filtermaterial bestehenden Filtermantel, dessen eine Mantelfläche mit dem Ansaugraum des äußeren Filtergehäuses und dessen andere Mantelfläche mit dem Auslaßraum des äußeren Filtergehäuses kommuniziert;
c) einem Motor, der den Filtermantel zum Abschütteln von ausgefilterten Pulver- oder Puderteilchen in Schwingungen versetzen kann;
   wobei
d) der Motor im Innenraum des Filtermantels angeordnet ist.

In der Druckindustrie werden Bestäubungseinrichtungen eingesetzt, welche große Mengen Puder auf die Druckprodukte aufbringen. Ein Teil des Puders bleibt an den Druckprodukten nicht haften und wird in einem Luftstrom aus der Druckmaschine herausgeführt. Die so mit Puderteilchen beladene Luft muß von den Puderteilchen befreit werden, bevor sie an die Außenatmosphäre abgegeben werden kann. Hierzu dienen Filter der oben genannten Art. Durch die Schüttelwirkung des in diesem vorgesehenen Motors lassen sich die ausgefilterten Staubteilchen aus dem Filtermantel auschütteln, so daß der Filtermantel eine lange Standzeit erhält.

Vom Markt her bekannt sind Filter, bei denen der Motor als Unwuchtmotor ausgebildet ist und sich außerhalb des Filtermantels befindet, wo er zusätzlichen Raum einnimmt. Außerdem ist die mechanische Ankopplung des Unwuchtmotors an den Filtermantel nicht optimal.

Die US 4 792 344 offenbart einen Luftfilter der eingangs genannten Art mit flachen Filtermatten, die V-förmig trogartige Filteranordnungen bilden. Eine die Filtermatten an ihrem unteren, einander angenäherten Ende tragende Endkappe weist einen zentralen Ständer auf, der im Inneren der Filteranordnung nach oben ragt und an seinem oberen Ende einen Treibzapfen trägt. Von Zeit zu Zeit wird dieser Treibzapfen mittels eines von einem elektrischen Motor angetriebenen Schaufelrades angestoßen, wodurch die unteren Enden der Filteranordnung in eine ggf. resonante Vibrationsbewegung versetzt werden, um den angesammelten Staub aus der Filtermatte zu entfernen.

Diese Anordnung erfordert eine separate Aufhängung des antreibenden Motors und belastet durch die auftretenden Schläge sowohl den Treibzapfen als auch das Schaufelrad mechanisch, was entsprechenden Verschleiß zur Folge hat.

Aufgabe der vorliegenden Erfindung ist es, ein Filter der eingangs genannten Art so auszugestalten, daß der Motor günstig an den Filtermantel angekoppelt werden kann und besonders große Wirkung erzielt, wobei die Wege, die zur mechanischen Ankopplung des Motors an den Filtermantel überbrückt werden müssen, kurz sind und die mechanische Ankopplung verschleißarm ist.

Diese Aufgabe wird erfindungsgemäß dadurch gelöst, daß
d) der Motor als Unwuchtmotor ausgebildet ist; und
e) der Unwuchtmotor an einem Stab befestigt ist, an welchem der Filtermantel aufgehängt ist.

Erfindungsgemäß bildet also der Motor, der als Unwuchtmotor ausgebildet ist, selbst einen Teil des schwingenden Systems. Dadurch ergibt sich eine besonders große Wirkung bei minimalem Ankoppelungsweg. Indem der Unwuchtmotor mit dem Filtermantel dauernd in Eingriff steht, entfallen verschleißbehaftete Ankoppelungen.

Der Stab kann dabei koaxial durch den Filtermantel hindurchgeführt und an einem den Filtermantel nach unten verschließenden Boden befestigt sein. Bei dieser Anordnung strömt die beladene Luft auf die außenliegende Mantelfläche des Filtermantels, durchströmt den Filtermantel radial nach innen und wird dann um 90° nach oben umgelenkt, so daß die gereinigte Luft in axialer Richtung abströmt. Der Unwuchtmotor liegt dabei im Strömungsweg der gereinigten Luft.

Die Halteeinrichtung für den Filtermantel, die für dessen Schwingungsfähigkeit sorgt, ist bei einem Ausführungsbeispiel der Erfindung so ausgebildet, daß der Stab an seinem oberen Ende mit einem horizontal verlaufenden Halteteil verbunden ist, dessen gegenüberliegende Enden über Gummipuffer mit dem äußeren Filtergehäuse verbunden sind.

Zweckmäßig ist ferner, wenn ein auf dem Stab geführter Zentrierring vorgesehen ist, der durch eine Feder gegen die Innenmantelfläche des Filtermaterials gedrückt ist.

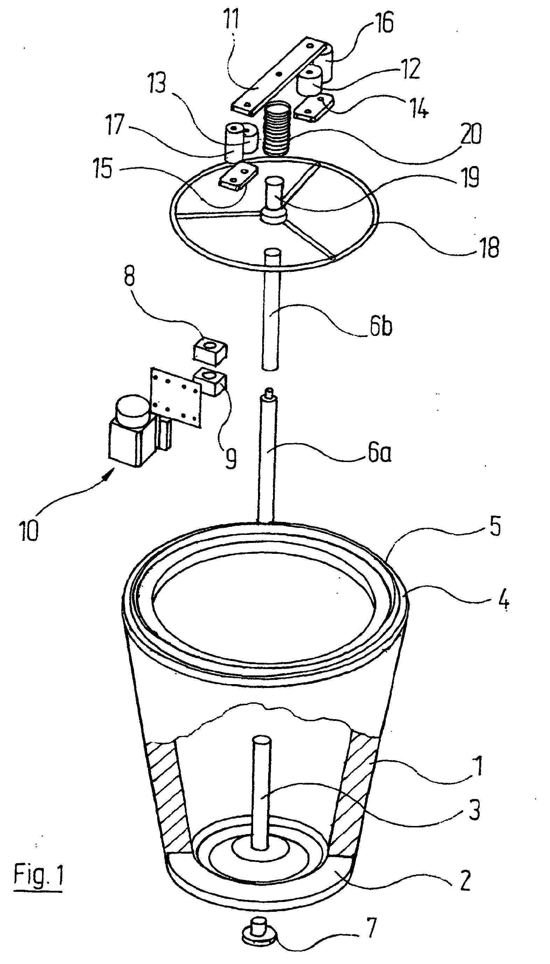

Ein Ausführungsbeispiel der Erfindung wird nachfolgend anhand der Zeichnung näher erläutert; es zeigen
- Figur 1: eine Explosionsansicht eines Filtereinsatzes, teilweise im Schnitt;
- Figur 2: einen Axialschnitt durch den Filtereinsatz von Figur 1;

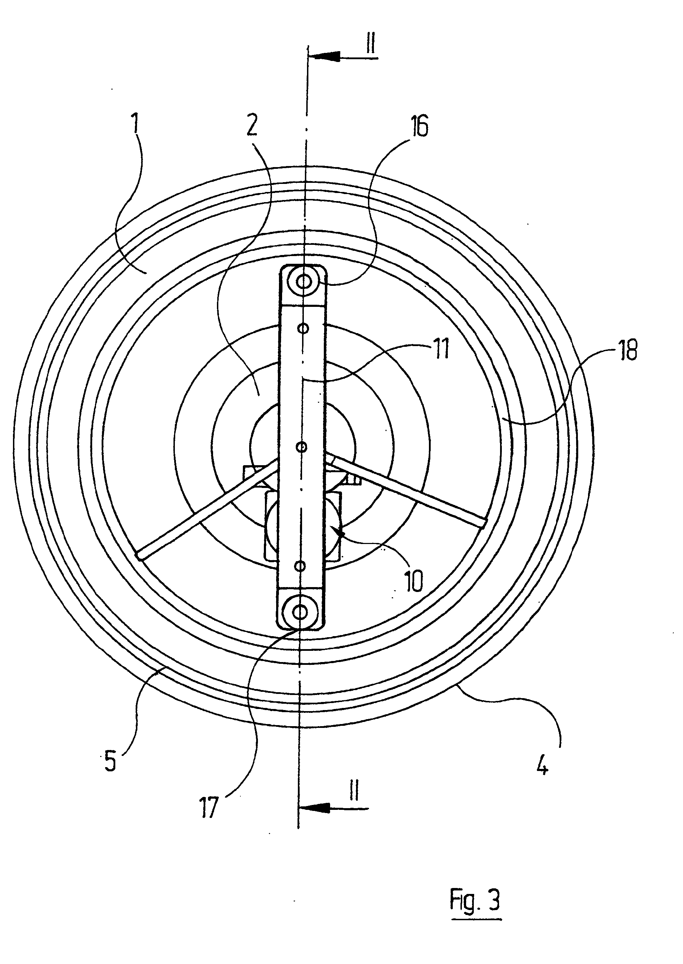

- Figur 3: eine Draufsicht auf den Filtereinsatz der Figuren 1 und 2.

Der in der Zeichnung dargestellte nachfolgend ausführlich beschriebene Filtereinsatz ist zum Einbau in ein äußeres Filtergehäuse gedacht, das der Übersichtlichkeit halber nicht dargestellt ist. In welcher Weise der Anschluß des Filtereinsatzes an das äußere Filtergehäuse erfolgt, wird später im einzelnen deutlich werden.

Der Filtereinsatz umfaßt als aktive Filterkomponente einen im Querschnitt kreisringförmigen Filtermantel 1, der als sich nach unten konisch verjüngendes Bauteil ausgebildet ist. Im allgemeinen besteht der Filtermantel 1 aus einem plisséartig gefalteten Papier- oder Tuchmaterial. In der Zeichnung ist er der Einfachheit halber als poröse Schicht mit einer bestimmten Dicke dargestellt.

Am unteren Ende ist der Filtermantel 1 mit einem profilierten Boden 2 versehen, der den Innenraum des Filtermantels 1 nach unten abschließt. Mittig an dem Boden 2 ist eine nach oben stehende, axial verlaufende Hülse 3 befestigt. Der obere Rand des Filtermantels 1 wird von einem starren Ring 4 gehalten, in dessen Oberseite eine Dichtlippe 5 eingelegt ist. Beim Einbau in das oben erwähnte Außengehäuse wird die Dichtlippe 5 gegen eine Wand angelegt, welche einen Ansaugraum, der mit der äußeren Mantelfläche des Filtermantels 1 kommuniziert, von einem Auslaßraum, der mit dem Innenraum des Filtermantels 1 kommuniziert, trennt.

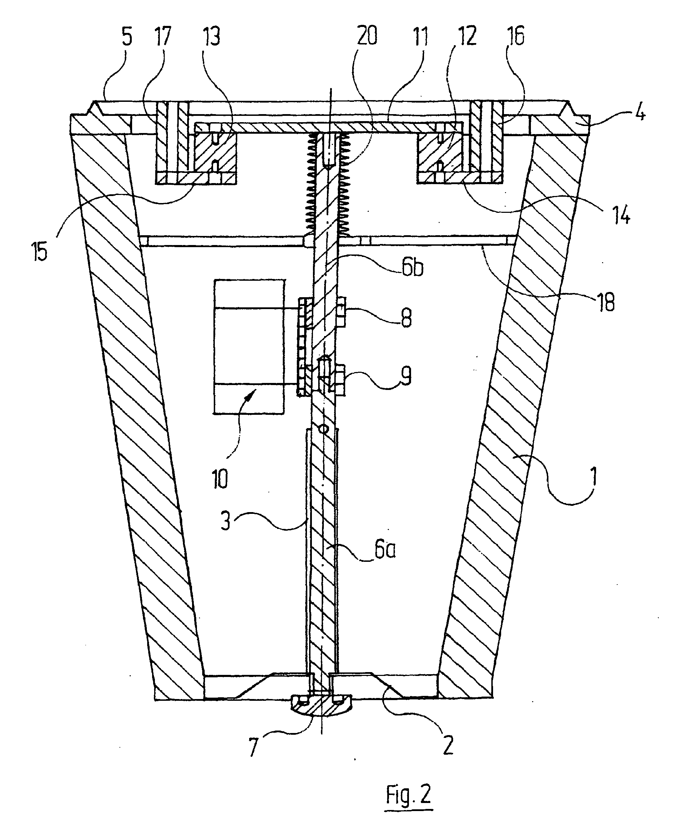

In die Hülse 3 ist ein Stab 6 eingeführt, der aus zwei Stabteilen 6a und 6b lösbar zusammengeschraubt ist. Das untere Ende des unteren Stabteiles 6a wird mit Hilfe eines Sterngriffes 7 in der Hülse 3 und damit im Boden 2 festgelegt. Der Sterngriff 7 und das Stabteil 6a besitzen hierzu komplementäre Gewinde, wie dies der Figur 2 zu entnehmen ist.

Auf dem oberen Stabteil 6b ist mit Hilfe zweier Schellen 8, 9 ein Unwuchtmotor 10 befestigt, der in der Zeichnung nur schematisch dargestellt ist. Das obere Ende des oberen Stabteiles 6b ist an einem horizontal verlaufenden Halteteil 11 angeschraubt, das seinerseits im Bereich seiner gegenüberliegenden Enden mit zwei nach unten verlaufenden Gummipuffern 12, 13 verbunden ist. Die unteren Enden der Gummipuffer 12, 13 sind jeweils an einer radial nach außen verlaufenden, kleinen Verbindungsplatte 14 bzw. 15 angeschraubt. An diesen Verbindungsplatten 14, 15 ist jeweils ein nach oben, sich parallel zu den Gummipuffern 12, bzw. 13 erstreckender Bolzen 16 bzw. 17 befestigt. Die Bolzen 16, 17 werden beim Einbau des Filtereinsatzes in das äußere Filtergehäuse an einer dortigen Platte befestigt, so daß also der gesamte Filtereinsatz über die oben beschriebene Halteeinrichtung an dem äußeren Filtergehäuse abgehängt ist, die aus den beiden Bolzen 16, 17, den Verbindungsplatten 14, 15, den Gummipuffern 12, 13 und dem Halteteil 11 besteht. Auf Grund der Gummipuffer 12, 13 können das Halteteil 11 und die über die Stabteile 6b und 6a an diesem befestigten Komponenten gegenüber dem äußeren Filtergehäuse Schwingungen durchführen.

Zur Lagestabilisierung des Filtermantels 1 ist ein Zentrierring 18 vorgesehen, dessen Nabe 19 auf das obere Stabteil 6b aufgeschoben ist. Der Zentrierring 18 wird mit Hilfe einer Druckfeder 20 nach unten gegen die Innenmantelfläche des Filtermantels 1 gedrückt.

Das oben beschriebene Filter funktioniert wie folgt:

Über den Ansaugraum des nicht dargestellten äußeren Filtergehäuses wird puderhaltige Luft angesaugt und über die Außenmantelfläche des Filtermantels 1 radial in den Innenraum des Filtermantels 1 eingebracht. Dabei scheiden sich die Puderpartikel an dem Filtermantel 1 ab. Die gereinigte Luft strömt aus dem Innenraum des Filtermantels 1 axial nach oben aus und gerät auf diese Weise in den Auslaßraum des äußeren Filtergehäuses und wird von dort wieder in die Außenatmosphäre abgegeben.

In periodischen Zeiträumen wird zur Reinigung des Filtermantels 1 der Unwuchtmotor 10 in Betrieb genommen. Der Filtermantel 1 gerät hierdurch in Schwingungen gegenüber dem stationären äußeren Filtergehäuse und schüttelt den an der Außenmanltelfläche des Filtermantels 1 anhaftende Puder nach unten ab.

Die an dem Halteteil 11 hängenden Baukomponenten stellen zusammen mit den Gummipuffern 12, 13 ein schwingungsfähiges System dar, das eine Resonanzfrequenz aufweist.
Beim Hochfahren der Drehzahl des Unwuchtmotors 10 wird diese Resonanzfrequenz durchlaufen. Während des Durchganges durch die Resonanzfrequenz finden besonders starke Schwingungen statt, und zwar sowohl beim Hochfahren als auch beim Zurückfahren der Drehzahl des Unwuchtmotors 10. Dieser Effekt, der die Reinigungswirkung des Unwuchtmotors 10 verstärkt, kann durch mehrfaches Ein- und Ausschalten des Unwuchtmotors 10 bei jedem Reinigungsvorgang wiederholt genutzt werden. Der zeitliche Abstand zwischen zwei aufeinander folgenden Reinigungsvorgängen wird durch eine Zeitsteuerung bestimmt. Die Dauer dieses Zeitabstandes hängt davon ab, wie stark die zu reinigende Luft mit Puder beladen ist.

Durch die Unterbringung des Unwuchtmotors 10 innerhalb des Innenraumes des Filtermantels 1 baut das gesamte Filter vergleichsweise klein; die Ankopplung des Unwuchtmotors 10 an den Filtermantel 1 über den mittleren Stab 6, den Boden 2 und den Zentrierring 18 ist besonders effektiv.

## Patentansprüche

1. Filter für mit Pulver- oder Puderteilchen beladene Luft mit
a) einem äußeren Filtergehäuse, das einen Ansaugraum für beladene Luft und einen Auslaßraum für gereinigte Luft aufweist;
b) einem aus Filtermaterial bestehenden Filtermantel, dessen eine Mantelfläche mit dem Ansaugraum des äußeren Filtergehäuses und dessen andere Mantelfläche mit dem Auslaßraum des äußeren Filtergehäuses kommuniziert;
c) einem Motor, der den Filtermantel zum Abschütteln von ausgefilterten Pulver- bzw. Puderteilchen in Schwingungen versetzen kann;
wobei
d) der Motor im Innenraum des Filtermantels angeordnet ist,
**dadurch gekennzeichnet, daß**
e) der Motor als Unwuchtmotor (10) ausgebildet ist; und
f) der Unwuchtmotor (10) an einem Stab (6) befestigt ist, an welchem der Filtermantel (1) aufgehängt ist.

2. Filter nach Anspruch 1, **dadurch gekennzeichnet, daß** der Stab (6) koaxial durch den Filtermantel (1) hindurchgeführt und an einem den Filtermantel (1) nach unten verschließenden Boden (2) befestigt ist.

3. Filter nach Anspruch 1 oder 2, **dadurch gekennzeichnet, daß** der Stab (6) an seinem oberen Ende mit einem horizontal verlaufenden Halteteil (11) verbunden ist, dessen gegenüberliegende Enden über Gummipuffer (12, 13) mit dem äußeren Filtergehäuse verbunden sind.

4. Filter nach einem der Ansprüche 1 bis 3, **dadurch gekennzeichnet, daß** ein auf dem Stab (6) geführter Zentrierring (18) vorgesehen ist, der durch eine Feder (20) gegen die Innenmantelfläche des Filtermantels (1) gedrückt ist.

## Claims

1. Filter for air contaminated with powder or powder particles, having
a) an outer filter housing, which comprises an intake chamber for contaminated air and an outlet chamber for purified air;
b) a filter shell consisting of filter material, the one circumferential surface of which communicates with the intake chamber of the outer filter housing and the other circumferential surface of which communicates with the outlet chamber of the outer filter housing;
c) a motor, which may cause the filter shell to vibrate in order to shake off filtered-out powder or powder particles;
d) the motor being arranged inside the filter shell,
**characterised in that**
e) the motor takes the form of an unbalance motor (10); and
f) the unbalance motor (10) is attached to a rod (6), on which the filter shell (1) is suspended.

2. Filter according to claim 1, **characterised in that** the rod (6) passes coaxially through the filter shell (1) and is attached to a base (2) closing the filter shell (1) at the bottom.

3. Filter according to claim 1 or claim 2, **characterised in that** the rod (6) is connected at its top end with a horizontally extending holding element (11), the opposing ends of which are connected with the outer filter housing via rubber buffers (12, 13).

4. Filter according to any one of claims 1 to 3, **characterised in that** a centring ring (18) guided on the rod (6) is provided, which is pressed by a spring (20) against the inner circumferential surface of the filter shell (1).

## Revendications

1. Filtre destiné à de l'air chargé de particules de poudre ou de poudre fine, comprenant
a) un carter extérieur muni d'une chambre d'aspiration d'air chargé, et d'une chambre d'évacuation d'air épuré ;
b) une enveloppe de filtration constituée d'un matériau filtrant, dont l'une des surfaces périphériques communique avec la chambre d'aspiration du carter extérieur du filtre, et dont l'autre surface périphérique communique avec la chambre d'évacuation dudit carter extérieur du filtre ;
c) un moteur pouvant imprimer des vibrations à l'enveloppe de filtration en vue d'expulser, par secousses, des particules respectives de poudre ou de poudre fine éliminées par filtration ;
sachant que
d) le moteur est logé dans l'espace interne de l'enveloppe de filtration,
**caractérisé par le fait que**
e) le moteur est réalisé sous la forme d'un moteur (10) à balourd ;
et
f) ledit moteur (10) à balourd est fixé à une tige (6) à laquelle l'enveloppe de filtration (1) est suspendue.

2. Filtre selon la revendication 1, **caractérisé par le fait que** la tige (6) traverse coaxialement l'enveloppe de filtration (1) et est fixée à un fond (2) obturant, vers le bas, ladite enveloppe de filtration (1).

3. Filtre selon la revendication 1 ou 2, **caractérisé par le fait que** la tige (6) est reliée, par son extrémité supérieure, à une pièce de retenue (11) qui s'étend horizontalement et dont les extrémités opposées sont reliées au carter extérieur dudit filtre, par l'intermédiaire de patins (12, 13) en caoutchouc.

4. Filtre selon l'une des revendications 1 à 3, **caractérisé par** la présence d'une bague de centrage (18) guidée sur la tige (6) et pressée, par un ressort (20), contre la surface périphérique intérieure de l'enveloppe de filtration (1).
